# EUROPEAN PATENT SPECIFICATION

(11) **EP 4 513 052 B1**
(45) Date of publication and mention of the grant of the patent: **30.09.2026**
(21) Application number: 22938243.7
(22) Date of filing: 27.10.2022
(51) Int. Cl.: F16F 9/19

(54) **YAW DAMPER, YAW DAMPER SYSTEM AND CONTROL METHOD THEREFOR, AND RAILWAY VEHICLE**
GIERDÄMPFER, GIERDÄMPFERSYSTEM UND STEUERUNGSVERFAHREN DAFÜR SOWIE SCHIENENFAHRZEUG
AMORTISSEUR DE LACET, SYSTÈME D'AMORTISSEUR DE LACET ET PROCÉDÉ DE COMMANDE ASSOCIÉ, ET VÉHICULE FERROVIAIRE

(30) Priority: 19.04.2022 CN 202210411771
(43) Date of publication of application: 26.02.2025
(73) Proprietor: CRRC Qingdao Sifang Co., Ltd., Qingdao, Shandong 266111 (CN)
(72) Inventor: CAO, Hongyong, Qingdao, Shandong 266111 (CN); FENG, Yang, Qingdao, Shandong 266111 (CN); HAN, Xu, Qingdao, Shandong 266111 (CN); WANG, Xu, Qingdao, Shandong 266111 (CN); ZHANG, Zhenxian, Qingdao, Shandong 266111 (CN)
(74) Representative: Prinz & Partner mbB
(86) International application number: PCT/CN2022/127817
(87) International publication number: WO 2023/202021

(56) References cited:
- CN-A- 1 699 781
- CN-A- 102 069 813
- CN-A- 110 374 950
- CN-A- 112 648 320
- CN-A- 114 738 423
- JP-A- 2002 054 675
- JP-A- H0 882 338
- JP-B2- 3 966 937
- US-A1- 2014 216 871

## Description

The present application claims the priorities to Chinese Patent Applications No. 202210411771.4, titled "YAW DAMPER, YAW DAMPER SYSTEM AND CONTROL METHOD THEREFOR, AND RAILWAY VEHICLE", filed with the China National Intellectual Property Administration on April 19, 2022.

### FIELD

The present application relates to the technical field of railway vehicles, and in particular to a yaw damper, a yaw damping system and a control method for the yaw damping system, and a railway vehicle.

### BACKGROUND

A yaw damper is one of the key components that affect the operating stability of railway vehicles. The railway vehicles have different parameter requirements for the damper when operating in different states, especially when they are operating across lines, across countries, and across regions more and more frequently, the parameter requirements for the damper are becoming more and more complex. In view of this, how to design a yaw damping system for railway vehicles to adapt to various operation states of the vehicle has become a technical problem for those skilled in the art to be solved.

JP 2002 054675 A discloses a damper for vibration damping, which is constructed such that a damping force control circuit has a main circuit and a bypass circuit juxtaposed to the main circuit. The main circuit has an orifice and a relief valve in series, and a high-pressure relief valve in parallel with the orifice and the low-pressure relief valve. The bypass circuit has a fail-safe valve consisting of a normally open on-off valve bypassing the orifice and the high-pressure relief valve and disposed in series with the low- pressure relief valve.

CN 112 648 320 A discloses a high-frequency-response damping-adjustable semi-active shock absorber which comprises an oil storage cylinder, a working cylinder, a piston rod and a bypass oil way. A one-way conduction valve is arranged between the working cylinder and the oil storage cylinder, and the two ends of the one-way conduction valve communicate with the lower end of the working cylinder and the interior of the oil storage cylinder correspondingly. A piston body is provided with a through hole and a piston one-way valve which enable an upper cavity and a lower cavity to communicate with each other, the bypass oil way comprises a first branch oil way, a second branch oil way and a third branch oil way which are arranged in parallel, the first branch oil way is connected with a first switch valve and a first pilot valve in series, the second branch oil way is provided with a second switch valve, and a first overflow valve is arranged on the third branch oil way.

### SUMMARY

An object of the present application is to provide a yaw damper, a yaw damping system and a control method for the yaw damping system, and a railway vehicle. With the structural configuration, the yaw damper has operation modes of a semi-active mode, a passive mode and a low damping mode, which can switched according to the operation states of the vehicle, thereby improving the adaptability of the vehicle to various treads.

In order to solve the technical problems above, a yaw damper is provided in the present application, including a hydraulic cylinder and an oil reservoir, and the hydraulic cylinder includes a cylinder body and a piston, the piston is slidably arranged inside the cylinder body and divides an inner chamber of the cylinder body into a rod chamber and a rodless chamber, a head of the piston is provided with an oil line that is in a unidirectional communication from the rodless chamber to the rod chamber,
a first branch oil line, a second branch oil line, and a third oil line, which are arranged in parallel, are provided between the rod chamber and the rodless chamber outside the cylinder body, and a first switch valve and an unloading valve are provided in the first branch oil line, a proportional electromagnetic valve is provided in the second branch oil line, and a second switch valve is provided in the third branch oil line, and
the oil reservoir is configured to replenish oil to the rodless chamber.

In an embodiment, the rodless chamber is connected to a first main oil line, and the first branch oil line and the second branch oil line are both connected to the first main oil line, an outlet of the oil reservoir is connected to the first main oil line, and a check valve, which implements a unidirectional communication towards the rodless chamber, is provided in the first main oil line.

In an embodiment, the rodless chamber is connected to a second main oil line, the third branch oil line is connected to the second main oil line, the second main oil line is further connected to the oil reservoir through a diverter oil line, and a third switch valve is provided on the diverter oil line.

In an embodiment, the unloading valve in the first branch oil line is further connected with an orifice valve in parallel.

A yaw damping system for a railway vehicle is further provided in the present application, including a controller and at least one yaw damper according to any one of items above, and the at least one the yaw damper is configured to be installed between a vehicle body of the railway vehicle and a bogie, and the controller is communicated with the at least one yaw damper so as to control operation states of the first branch oil line, the second branch oil line, and the third oil line.

In an embodiment, the yaw damping system further includes an actuator, a first detection module and a second detection module, and the actuator, the first detection module and the second detection module are all communicated with the controller,
the first detection module is installed on the at least one yaw damper to detect an operation information of the at least one yaw damper, and the second detection module is installed on the railway vehicle to detect an operation information of the railway vehicle,
the controller is configured to generate an actuating signal according to a detection information from the first detection module and the second detection module for the actuator to control an action of the at least one yaw damper.

In an embodiment, the first detection module includes a pressure sensor, and the second detection module includes an acceleration sensor and a gyroscope, the acceleration sensor is installed on the bogie and the gyroscope is installed on the vehicle body.

A control method for the yaw damping system according to any one of items above is further provided in the present application, and the method includes:
when the railway vehicle is running in a straight route, the controller controls the yaw damper to switch into a semi-active mode, in which the first switch valve and the second switch valve are closed, and a damping force of the yaw damper is adjusted by the proportional electromagnetic valve in the second branch oil line,
when the railway vehicle is running in a curve route, the controller controls the yaw damper to switch into a low damping mode, in which the first switch valve is open and the second switch valve is closed, the damping force of the yaw damper is reduced to a minimum value,
when the yaw damping system malfunctions, the controller controls the yaw damper to switch into a passive mode, in which the first switch valve is open and the second switch valve is closed, the damping force of the yaw damper is adjusted by the unloading valve.

In an embodiment, a curve radius of a track on which the railway vehicle is running is determined by obtaining operation parameters of the railway vehicle,
if the curve radius is greater than a preset value, determining that the railway vehicle is running in a straight route, and
if the curve radius is less than the preset value, determining that the railway vehicle is running in a curve route.

A railway vehicle is further provided in the present application, including the yaw damper according to any one of items above, or including the yaw damping system according to any one of items above.

In the present application, the structure of the yaw damper for railway vehicle is optimized. The operation modes of the yaw damper can be switched according to communication states of oil lines thereof, the yaw damper has three operation modes: semi-active mode, low damping mode, and passive mode. Therefore, an appropriate operation mode can be selected according to the actual operating situation of the railway vehicle. Specifically, the semi-active mode is adopted when the vehicle is running in a straight route to adjust the unloading parameters in real time according to the different operation mileage, in order to extend the repair cycle and reduce operating costs. The low damping mode is adopted when the vehicle is running in a curved route, which can reduce the revolution stiffness of the vehicle, improve the curve passing speed of the vehicle, and reduce wheel and track wear. When the system malfunctions, it switches to the passive mode to ensure the normal operation of the vehicle.

### BRIEF DESCRIPTION OF THE DRAWINGS

FIG. 1 is a schematic structural view of a yaw damping system according to an embodiment of the present application;
FIG. 2 is a schematic structural view of a yaw damper according to an embodiment of the present application in a semi-active mode;
FIG. 3 is a schematic structural view of the yaw damper according to an embodiment of the present application in a low damping mode; and
FIG. 4 is a schematic structural view of the yaw damper according to an embodiment of the present application in a passive mode.

### Numeral references in drawings:

10 yaw damper, 20 controller, 30 actuator, 40 acceleration sensor, 50 gyroscope,
11 cylinder body, 12 piston, 13 first check valve,
a1 first branch oil line, 21 first switch valve, 22 unloading valve, 23 orifice valve,
a2 second branch oil line, 31 proportional electromagnetic valve,
a3 third branch oil line, 41 second switch valve,
b1 first main oil line, 51 second check valve, 52 oil reservoir,
b2 second main oil line, b3 third main oil line,
c1 diverter oil line, 61 third switch valve,
70 pressure sensor.

### DETAILED DESCRIPTION OF THE EMBODIMENTS

In order to better understand the present application for those skilled in the art, the present application is further described hereinafter in conjunction with the drawings and specific embodiments.

For the sake of simplicity and ease of understanding, the following will explain a yaw damper, a yaw damping system and a control method therefore, and a railway vehicle together. The beneficial effects will not be repeated.

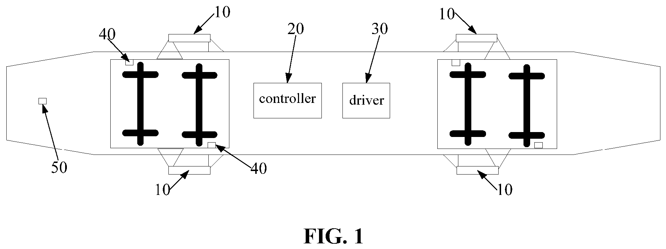

Referring to FIG. 1, FIG. 1 is a schematic structural view of a yaw damping system according to an embodiment of the present application.

A railway vehicle is provided with a yaw damper 10. Due to the fact that the railway vehicle is running in different states, the parameter requirements for the yaw damper 10 are also different. In order to well adapt to the different operation states of railway vehicle, the yaw damper 10 provided in the embodiment is able to adjust its operation modes accordingly. Correspondingly, a yaw damping system is installed on the railway vehicle to switch operation modes of the yaw damper 10 according to operation parameters of the railway vehicle.

In the embodiment, the yaw damping system includes a yaw damper 10. Generally, the yaw damper 10 is installed on both a leading bogie and a trailing bogie of a vehicle body. Specifically, the yaw damper 10 is connected between the vehicle body and the bogies. Along a width direction of the vehicle body, the yaw damper 10 is installed on both sides of the bogie. FIG. 1 exemplarily shows a structure in which four yaw dampers 10 are installed on the vehicle body. In practical, two yaw dampers 10 may also be installed on each side of the bogie, so that eight yaw dampers 10 are totally installed on one vehicle body. The specific configuration is set as required.

The yaw damping system further includes a controller 20, which is communicated with the respective yaw damper 10 so as to control the operation mode of the yaw damper 10.

Furthermore, the yaw damping system further includes an actuator 30, which is communicated with the controller 20. The controller 20 is used to generate actuating signals for the actuator 30 to control an action of the yaw damper 10 to switch the operation states.

Specifically, the controller 20 generates the actuating signals based on the operation information of the railway vehicle and the operation information of the yaw damper 10.

To obtain the operation information of the railway vehicle, the yaw damping system includes a first detection module and a second detection module. The controller 20 is also communicated with the first detection module and the second detection module. The first detection module is installed on the yaw damper 10 to detect the operation information of the yaw damper 10, and the second detection module is installed on the railway vehicle to detect the operation information of the railway vehicle. The controller 20 may be in communication with a vehicle control unit of the railway vehicle to obtain the vehicle speed information.

Specifically, the controller 20 can determine a curve radius of a track on which the railway vehicle is running based on the obtained vehicle operation information, in order to determine whether the vehicle is running in a straight or curved route, and thus generate the operation mode for controlling the yaw damper 10. The controller 20 also adjusts the yaw damper 10 in the current operation mode based on the vehicle operation information and the information from the first detection module, so as to provide a damping force required by the vehicle in the current operation state.

The second detection module includes an acceleration sensor 40 and a gyroscope 50, as shown in FIG. 1. Multiple acceleration sensors 40 are provided, and in the shown example, two acceleration sensors 40 are installed on each of the leading bogie and the trailing bogie of the vehicle body. The two acceleration sensors 40 on the same bogie are installed at diagonal positions. A yaw rate acceleration of the vehicle can be obtained through detection signals of the acceleration sensors 40.

The gyroscope 50 is installed on the vehicle body to measure an angular velocity of the vehicle body. The controller 20 can calculate a truck curve radius of the vehicle based on the vehicle speed information, the measurement data of the gyroscope 50, and the measurement data of the acceleration sensor 40. The calculation formula is known in the art, which is not repeated here. The track curve radius may be obtained by various ways, and different information is required according to different calculation formulas. As such, corresponding detection elements may be provided to detect the corresponding vehicle operation parameters.

In the embodiment, the yaw damper 10 has three operation modes through a structural design (which is described in detail below): semi-active mode, low damping mode, and passive mode.

Based on the yaw damping system, a control method for the yaw damping system is further provided in the embodiment, which specifically includes: when the railway vehicle is running in a straight route, the controller 20 generates a first actuating signal and transmits it to the actuator 30, and the actuator 30 actuates the yaw damper 10 to be switched to the semi-active mode according to the received first actuating signal. When the railway vehicle is running in a curve route, the controller 20 generates a second actuating signal and transmits it to the actuator 30. The actuator 30 then actuates the yaw damper 10 based on the received second actuating signal to be switched to the low damping mode. In case of a system malfunction, such as a damage to the gyroscope 50 or the acceleration sensor 40, the actuator 30 can control the yaw damper 10 to be switched to the passive mode to ensure the normal operation of the vehicle.

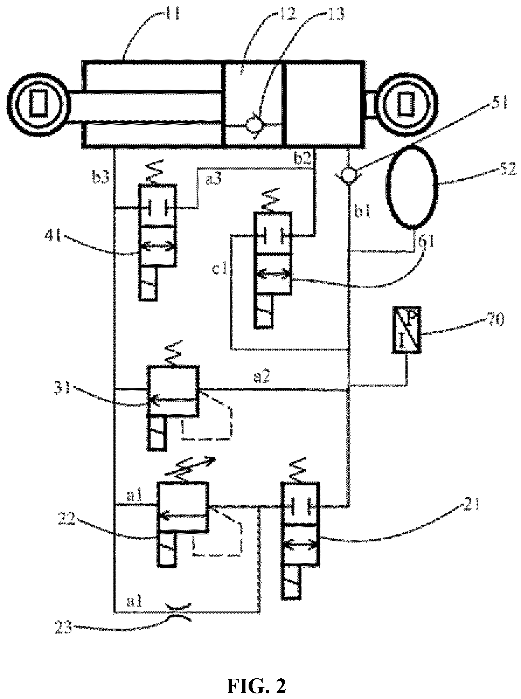

Referring to FIG. 2 to FIG. 4, the specific structure and various operation modes of the yaw damper 10 provided in the embodiment is illustrated below.

The yaw damper 10 includes a hydraulic cylinder, which includes a cylinder body 11 and a piston 12. The piston 12 is slidably arranged inside the cylinder body 11 and divides an inner chamber of the cylinder body 11 into a rod chamber and a rodless chamber. Based on the orientation shown in the drawing, a left chamber of the cylinder body 11 is a rod chamber and a right chamber is a rodless chamber. A head of the piston 12 is further provided with a first check valve 13 that implements a unidirectional communication from the rodless chamber to the rod chamber.

During installation, the cylinder body 11 of the hydraulic cylinder may be connected to the bogie, and the rod of piston 12 is connected to the vehicle body. Alternatively, the cylinder body 11 may be connected to the vehicle body, and the rod of piston 12 is connected to the bogie.

The yaw damper 10 is further provided with three branch oil lines, which are arranged in parallel and connected between the rod chamber and the rodless chamber outside the cylinder body 11. For sake of description, hereinafter, the three branch oil lines is referred to as a first branch oil line a1, a second branch oil line a2, and a third branch oil line a3.

As shown in the drawings, a first switch valve 21 and an unloading valve 22 are provided in the first branch oil line a1. The relevant parameters of the unloading valve 22 in an initial state have been set according to the requirements of the yaw damper 10 based on the vehicle model and so on. When required, the relevant structure of the unloading valve 22 may be replaced or adjusted in the future. A proportional electromagnetic valve 31 is provided in the second branch oil line a2, and the opening pressure of the proportional electromagnetic valve 31 may be set according to actual requirements, which generally is greater than the opening pressure of the unloading valve 22. A second switch valve 41 is provided in the third branch oil line a3.

The yaw damper 10 further includes an oil reservoir 52 for replenishing oil to the rodless chamber.

Specifically, in order to simplify the oil lines, the rodless chamber of the cylinder body 11 is connected to two main oil lines, which are herein referred as a first main oil line b1 and a second main oil line b2. The first branch oil line a1 and the second branch oil line a2 are both connected to the first main oil line b1, and the oil reservoir 52 is also connected to the first main oil line b1. A second check valve 51, which implements a unidirectional communication towards the rodless chamber, is further provided in the first main oil line b1 between the oil reservoir 52 and the rodless chamber. The second check valve 51 can prevent the oil in the rodless chamber from flowing back to the oil reservoir 52. The third branch oil line a3 is connected to the second main oil line b2.

The rod chamber of cylinder body 11 is connected to a third main oil line b3, and the first, second, and third branch oil lines a1, a2, and a3 are all connected to the third main oil line b3 to simplify the configuration of the oil lines.

Furthermore, the second main oil line b2 is also connected to the oil reservoir 52 through a diverter oil line c1, and a third switch valve 61 is provided in the diverter oil line c1.

Furthermore, the unloading valve 22 in the first branch oil line a1 is also connected with an orifice valve 23 in parallel.

With the above setting, referring to FIG. 2, FIG. 2 schematically shows the structure of the yaw damper 10 in the semi-active mode.

As shown in FIG. 2, in the semi-active mode, the first switch valve 21, the second switch valve 41, and the third switch valve 61 are closed. At this time, when a rod portion of the piston 12 of the hydraulic cylinder extends out in a direction shown in the drawing, that is, the piston 12 moves leftward, i.e. towards the rod chamber, the hydraulic oil flows out of the rod chamber of the cylinder body 11 and then flows into the rodless chamber of the cylinder body 11 through the third main oil line b3, the proportional electromagnetic valve 31 of the second branch oil line a2, and the second check valve 51 of the first main oil line b1. Meanwhile, the oil reservoir 52 can replenish oil to the rodless chamber through the first main oil line b1. The damping force of the system is adjusted by the proportional electromagnetic valve 31. When the rod portion of the piston 12 of the hydraulic cylinder retracts, that is, the piston 12 moves rightward, i.e., towards the rodless chamber, the second check valve 51 of the first main oil line b1 is in a closed state. The hydraulic oil in the rodless chamber flows to the rod chamber through the first check valve 13 and then flows into the oil reservoir 52 through the third main oil line b3 and the second branch oil line a2. The damping force of the system is adjusted by the proportional electromagnetic valve 31.

In the embodiment, the first detection module installed on the yaw damper 10 is embodied as a pressure sensor 70, which is used to obtain the oil pressure of the yaw damper 10. The controller 20 can calculate the current required damping force with a pre-stored algorithm based on the detection information of the pressure sensor 70 and the acceleration sensor 40, to control the proportional electromagnetic valve 31. The algorithm for obtaining the damping force is also known in the art, which are selected according to the actual needs. The specific algorithm will not be discussed in the present application.

When the railway vehicle is running in a straight route, the yaw damper 10 is in the semi-active mode, in which the parameters, such as the unloading force, the unloading speed and so on, can be adjusted in real time according to the different operation mileages, in order to extend the repair cycle and reduce operation costs.

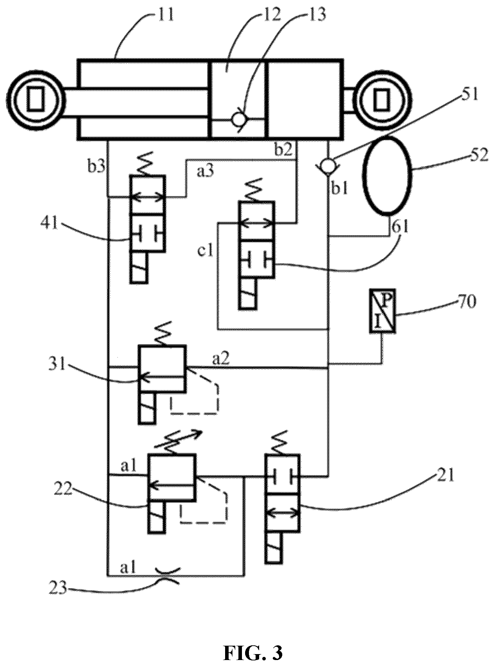

As shown in FIG. 3, in the low damping mode, the first switch valve 21 is closed and the second switch valve 41 and the third switch valve 61 are open. At this time, when the rod portion of the piston 12 of the hydraulic cylinder extends out in the direction shown in the drawing, that is, the piston 12 moves leftward, i.e., towards the rod chamber, the hydraulic oil flows out of the rod chamber of the cylinder body 11 and then flows into the rodless chamber of the cylinder body 11 through the third main oil line b3, the second switch valve 41 of the third branch oil line a3, and the second main oil line b2. Meanwhile, the oil reservoir 52 can replenish oil to the rodless chamber through the first main oil line b1, and the damping force of the yaw damper 10 is reduced to a minimum value. When the rod portion of the piston 12 of the hydraulic cylinder retracts, that is, the piston 12 moves rightward, i.e., towards the rodless chamber, the second check valve 51 of the first main oil line b1 is in a closed state. The hydraulic oil in the rodless chamber flows to the rod chamber through the first check valve 13, and then flows into the rod chamber through the third main oil line b3, the third branch oil line a3, and the second main oil line b2. Excess oil can flow into the oil reservoir 52 through a diverter oil line c1.

When the railway vehicle is running in a curve route, the yaw damper 10 is in the low damping mode, in which a revolution stiffness of the vehicle may be reduced, the curve running speed of the vehicle may be increased and the wheel rail wear may be reduced.

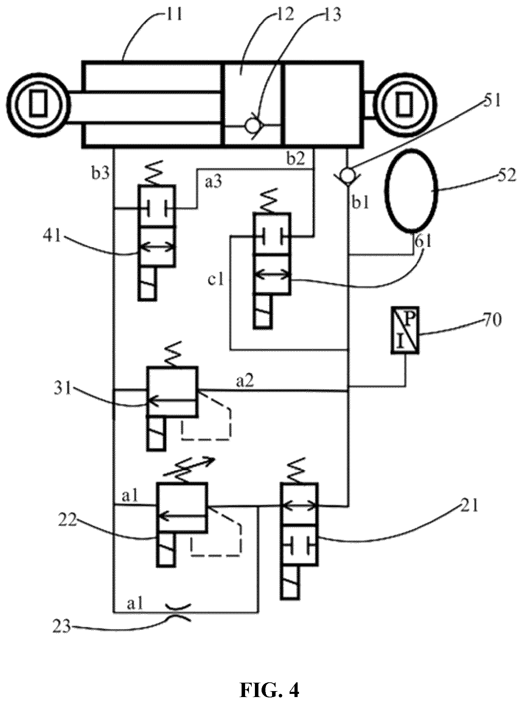

As shown in FIG. 4, in the passive mode, the first switch valve 21 is open and the second switch valve 41 and the third switch valve 61 are closed. At this time, when the rod portion of the piston 12 of the hydraulic cylinder extends out in the direction shown in the drawing, that is, the piston 12 moves leftward, i.e., towards the rod chamber, the hydraulic oil flows out of the rod chamber of the cylinder body 11 and then flows into the rodless chamber through the third main oil line b3, the orifice valve 23 of the first branch oil line a1, and the first main oil line b1. When the pressure reaches to a preset value of the unloading valve 22, an unloading action can be carried out through the unloading valve 22, and the damping force of the system is adjusted by the orifice valve 23 and the unloading valve 22 together. Meanwhile, the oil reservoir 52 can replenish oil to the rodless chamber through the first main oil line b1. When the rod of the piston 12 of the hydraulic cylinder retracts, that is, the piston 12 moves rightward, i.e., towards the rodless chamber, the second check valve 51 of the first main oil line b1 is in a closed state, the hydraulic oil in the rodless chamber flows towards the rod chamber through the first check valve 13, and then flows into the oil reservoir 52 through the third main oil line b3 and the first branch oil line a1. The damping force of the system is adjusted by the orifice valve 23 and the unloading valve 22 together.

When the yaw damping system of the railway vehicle malfunctions, such as the gyroscope 50 or acceleration sensor 40 being damaged, the system can be switched to the passive mode to ensure the normal operation of the railway vehicle.

The above provides a detailed introduction to the yaw damper, the yaw damping system and the control method therefor, and the railway vehicle according to the present application. Specific examples are provided to explain the principles and the embodiments of the present application. The description to the embodiments above is only used to help understand the method and the concept of the present application. It should be noted that for those skilled in the art several improvements and modifications can be made to the present application without departing from the principles of the present application, as long as they fall within the scope of the claims of the present application.

## Claims

1. A yaw damper (10), comprising a hydraulic cylinder and an oil reservoir (52), wherein
the hydraulic cylinder comprises a cylinder body (11) and a piston (12), the piston (12) is slidably arranged inside the cylinder body (11) and divides an inner chamber of the cylinder body (11) into a rod chamber and a rodless chamber, a head of the piston (12) is provided with an oil line that is in a unidirectional communication from the rodless chamber to the rod chamber,
a first branch oil line (a1), a second branch oil line (a2), and a third branch oil line (a3), which are arranged in parallel, are provided between the rod chamber and the rodless chamber outside the cylinder body (11), and a first switch valve (21) and an unloading valve (22) are provided in the first branch oil line (a1),
a second switch valve (41) is provided in the third branch oil line (a3), and
the oil reservoir (52) is configured to replenish oil to the rodless chamber,
**characterized in that**, an proportional electromagnetic valve (31) is provided in the second branch oil line (a2).

2. The yaw damper (10) according to claim 1, wherein the rodless chamber is connected to a first main oil line (b1), and the first branch oil line (a1) and the second branch oil line (a2) are both connected to the first main oil line (b1), an outlet of the oil reservoir (52) is connected to the first main oil line (b1),
a check valve (51), which implements a unidirectional communication towards the rodless chamber, is provided in the first main oil line (b1).

3. The yaw damper (10) according to claim 1 or claim 2, wherein the rodless chamber is connected to a second main oil line (b2), the third branch oil line (a3) is connected to the second main oil line (b2), the second main oil line (b2) is further connected to the oil reservoir (52) through a diverter oil line (c1), and a third switch valve (61) is provided on the diverter oil line (c1).

4. The yaw damper (10) according to claim 3, wherein the unloading valve (22) in the first branch oil line (a1) is further connected with an orifice valve (23) in parallel.

5. A yaw damping system for a railway vehicle, comprising a controller (20) and at least one yaw damper (10) according to any one of claims 1 to 4, wherein the at least one the yaw damper (10) is configured to be installed between a vehicle body of the railway vehicle and a bogie, and the controller (20) is communicated with the at least one yaw damper (10) so as to control operation states of the first branch oil line (a1), the second branch oil line (a2), and the third branch oil line (a3).

6. The yaw damping system according to claim 5, further comprising an actuator, a first detection module and a second detection module, wherein the actuator, the first detection module and the second detection module are all communicated with the controller (20),
the first detection module is installed on the at least one yaw damper (10) to detect an operation information of the at least one yaw damper (10), and the second detection module is installed on the railway vehicle to detect an operation information of the railway vehicle,
the controller (20) is configured to generate actuating signals according to a detection information from the first detection module and the second detection module for the actuator to control an action of the at least one yaw damper (10).

7. The yaw damping system according to claim 6, wherein the first detection module comprises a pressure sensor (70), and the second detection module comprises an acceleration sensor (40) and a gyroscope (50),
the acceleration sensor (40) is installed on the bogie and the gyroscope (50) is installed on the vehicle body.

8. A control method for the yaw damping system according to any one of claims 5 to 7, comprising:
when the railway vehicle is running in a straight route, the controller (20) controls the yaw damper (10) to switch into a semi-active mode, in which the first switch valve (21) and the second switch valve (41) are closed, and a damping force of the yaw damper (10) is adjusted by the proportional electromagnetic valve (31) in the second branch oil line (a2),
when the railway vehicle is running in a curve route, the controller (20) controls the yaw damper (10) to switch into a low damping mode, in which the first switch valve (21) is closed and the second switch valve (41) is open, the damping force of the yaw damper (10) is reduced to a minimum value,
when the yaw damping system malfunctions, the controller (20) controls the yaw damper (10) to switch into a passive mode, in which the first switch valve (21) is open and the second switch valve (41) is closed, the damping force of the yaw damper (10) is adjusted by the unloading valve (22).

9. The control method according to claim 8, wherein a curve radius of a track on which the railway vehicle is running is determined by obtaining operation parameters of the railway vehicle,
if the curve radius is greater than a preset value, determining that the railway vehicle is running in a straight route, and
if the curve radius is less than the preset value, determining that the railway vehicle is running in a curve route.

10. A railway vehicle, comprising the yaw damper (10) according to any one of claims 1 to 4, or comprising the yaw damping system according to any one of claims 5 to 7.

## Patentansprüche

1. Gierdämpfer (10), mit einem Hydraulikzylinder und einem Ölbehälter (52), wobei
der Hydraulikzylinder einen Zylinderkörper (11) und einen Kolben (12) umfasst, der Kolben (12) verschiebbar im Zylinderkörper (11) angeordnet ist und eine Innenkammer des Zylinderkörpers (11) in eine Stangenkammer und eine stangenlose Kammer unterteilt, wobei ein Kopf des Kolbens (12) mit einer Ölleitung versehen ist, die in einer einseitig gerichteten Verbindung von der stangenlosen Kammer zur Stangenkammer steht,
eine erste Zweigölleitung (a1), eine zweite Zweigölleitung (a2) und eine dritte Zweigölleitung (a3), die parallel angeordnet sind, außerhalb des Zylinderkörpers (11) zwischen der Stangenkammer und der stangenlosen Kammer vorgesehen sind und ein erstes Umschaltventil (21) und ein Entlastungsventil (22) in der ersten Zweigölleitung (a1) vorgesehen sind,
ein zweites Umschaltventil (41) in der dritten Zweigölleitung (a3) vorgesehen ist und
der Ölbehälter (52) so ausgebildet ist, dass er Öl in die stangenlose Kammer nachfüllt,
**dadurch gekennzeichnet, dass** in der zweiten Zweigölleitung (a2) ein Proportional-Elektromagnetventil (31) vorgesehen ist.

2. Gierdämpfer (10) nach Anspruch 1, bei dem die stangenlose Kammer mit einer ersten Hauptölleitung (b1) verbunden ist und die erste Zweigölleitung (a1) und die zweite Zweigölleitung (a2) beide mit der ersten Hauptölleitung (b1) verbunden sind, wobei ein Auslass des Ölbehälters (52) mit der ersten Hauptölleitung (b1) verbunden ist,
in der ersten Hauptölleitung (b1) ein Rückschlagventil (51) vorgesehen ist, das eine einseitig gerichtete Verbindung zur stangenlosen Kammer realisiert.

3. Gierdämpfer (10) nach Anspruch 1 oder Anspruch 2, bei dem die stangenlose Kammer mit einer zweiten Hauptölleitung (b2) verbunden ist, die dritte Zweigölleitung (a3) mit der zweiten Hauptölleitung (b2) verbunden ist, die zweite Hauptölleitung (b2) ferner über eine Umleitölleitung (c1) mit dem Ölbehälter (52) verbunden ist und an der Umleitölleitung (c1) ein drittes Umschaltventil (61) vorgesehen ist.

4. Gierdämpfer (10) nach Anspruch 3, bei dem das Entlastungsventil (22) in der ersten Zweigölleitung (a1) ferner mit einem Drosselventil (23) parallel geschaltet ist.

5. Gierdämpfungssystem für ein Schienenfahrzeug, mit einer Steuereinheit (20) und wenigstens einem Gierdämpfer (10) nach einem der Ansprüche 1 bis 4, wobei der wenigstens eine Gierdämpfer (10) zum Einbau zwischen einem Wagenkasten des Schienenfahrzeugs und einem Drehgestell eingerichtet ist und die Steuereinheit (20) mit dem wenigstens einen Gierdämpfer (10) so in Verbindung steht, dass sie Betriebszustände der ersten Zweigölleitung (a1), der zweiten Zweigölleitung (a2) und der dritten Zweigölleitung (a3) steuert.

6. Gierdämpfungssystem nach Anspruch 5, ferner mit einem Aktuator, einem ersten Erfassungsmodul und einem zweiten Erfassungsmodul, wobei der Aktuator, das erste Erfassungsmodul und das zweite Erfassungsmodul alle mit der Steuereinheit (20) in Verbindung stehen,
das erste Erfassungsmodul so an dem wenigstens einen Gierdämpfer (10) angebracht ist, dass es eine Betriebsinformation des wenigstens einen Gierdämpfers (10) erfasst, und das zweite Erfassungsmodul so an dem Schienenfahrzeug angebracht ist, dass es eine Betriebsinformation des Schienenfahrzeugs erfasst,
die Steuereinheit (20) so eingerichtet ist, dass sie entsprechend einer Erfassungsinformation von dem ersten Erfassungsmodul und dem zweiten Erfassungsmodul Ansteuersignale für den Aktuator erzeugt, damit eine Aktion des wenigstens einen Gierdämpfers (10) gesteuert wird.

7. Gierdämpfungssystem nach Anspruch 6, bei dem das erste Erfassungsmodul einen Drucksensor (70) umfasst und das zweite Erfassungsmodul einen Beschleunigungssensor (40) und ein Gyroskop (50) umfasst,
wobei der Beschleunigungssensor (40) am Drehgestell und das Gyroskop (50) am Wagenkasten angebracht ist.

8. Steuerungsverfahren für das Gierdämpfungssystem nach einem der Ansprüche 5 bis 7, das Folgendes umfasst:
wenn das Schienenfahrzeug auf einer geraden Strecke fährt, steuert die Steuereinheit (20) den Gierdämpfer (10) so, dass er in einen halbaktiven Modus umschaltet, in dem das erste Umschaltventil (21) und das zweite Umschaltventil (41) geschlossen sind und eine Dämpfungskraft des Gierdämpfers (10) von dem Proportional-Elektromagnetventil (31) in der zweiten Zweigölleitung (a2) eingestellt wird,
wenn das Schienenfahrzeug auf einer Kurvenstrecke fährt, steuert die Steuereinheit (20) den Gierdämpfer (10) so, dass er in einen Modus mit geringer Dämpfung umschaltet, in dem das erste Umschaltventil (21) geschlossen und das zweite Umschaltventil (41) geöffnet ist, wobei die Dämpfungskraft des Gierdämpfers (10) auf einen Mindestwert herabgesetzt wird,
wenn das Gierdämpfungssystem eine Störung aufweist, steuert die Steuereinheit (20) den Gierdämpfer (10) so, dass er in einen passiven Modus umschaltet, in dem das erste Umschaltventil (21) geöffnet und das zweite Umschaltventil (41) geschlossen ist, wobei die Dämpfungskraft des Gierdämpfers (10) von dem Entlastungsventil (22) eingestellt wird.

9. Steuerungsverfahren nach Anspruch 8, bei dem ein Kurvenradius eines Bahngleises, auf dem das Schienenfahrzeug fährt, bestimmt wird, indem Betriebsparameter des Schienenfahrzeugs gewonnen werden,
wobei, wenn der Kurvenradius größer als ein vorgegebener Wert ist, festgestellt wird, dass das Schienenfahrzeug auf einer geraden Strecke fährt, und
wenn der Kurvenradius kleiner als der vorgegebene Wert ist, festgestellt wird, dass das Schienenfahrzeug auf einer Kurvenstrecke fährt.

10. Schienenfahrzeug, mit dem Gierdämpfer (10) nach einem der Ansprüche 1 bis 4 oder mit dem Gierdämpfungssystem nach einem der Ansprüche 5 bis 7.

## Revendications

1. Amortisseur de lacet (10), comprenant un vérin hydraulique et un réservoir d'huile (52),
le vérin hydraulique comprenant un corps de vérin (11) et un piston (12), le piston (12) étant monté de manière coulissante à l'intérieur du corps de vérin (11) et divisant une chambre interne du corps de vérin (11) en une chambre à tige et une chambre sans tige, une tête du piston (12) étant pourvue d'une conduite d'huile qui est en communication unidirectionnelle de la chambre sans tige vers la chambre à tige,
une première conduite d'huile de branchement (a1), une deuxième conduite d'huile de branchement (a2) et une troisième conduite d'huile de branchement (a3) qui sont agencées en parallèle étant prévues entre la chambre à tige et la chambre sans tige à l'extérieur du corps de cylindre (11), et une première vanne de commutation (21) et une vanne de décharge (22) étant prévues dans la première conduite d'huile de branchement (a1),
une deuxième vanne de commutation (41) étant prévue dans la troisième conduite d'huile de branchement (a3), et
le réservoir d'huile (52) étant réalisé de manière à remplir la chambre sans tige d'huile,
**caractérisé en ce qu'**une électrovanne proportionnelle (31) est prévue dans la deuxième conduite d'huile de branchement (a2).

2. Amortisseur de lacet (10) selon la revendication 1, la chambre sans tige étant raccordée à une première conduite d'huile principale (b1), et la première conduite d'huile de branchement (a1) et la deuxième conduite d'huile de branchement (a2) étant toutes deux raccordées à la première conduite d'huile principale (b1), une sortie du réservoir d'huile (52) étant raccordée à la première conduite d'huile principale (b1),
un clapet anti-retour (51) assurant une communication unidirectionnelle vers la chambre sans tige étant prévu dans la première conduite d'huile principale (b1).

3. Amortisseur de lacet (10) selon la revendication 1 ou la revendication 2, la chambre sans tige étant raccordée à une deuxième conduite d'huile principale (b2), la troisième conduite d'huile de branchement (a3) étant raccordée à la deuxième conduite d'huile principale (b2), la deuxième conduite d'huile principale (b2) étant en outre raccordée au réservoir d'huile (52) par l'intermédiaire d'une conduite d'huile de branchement (c1), et une troisième vanne de commutation (61) étant prévue sur la conduite d'huile de branchement (c1).

4. Amortisseur de lacet (10) selon la revendication 3, la vanne de décharge (22) dans la première conduite d'huile de branchement (a1) étant en outre raccordée en parallèle à une vanne à orifice (23).

5. Système d'amortissement de lacet pour véhicule ferroviaire, comprenant une unité de commande (20) et au moins un amortisseur de lacet (10) selon l'une des revendications 1 à 4, ledit au moins un amortisseur de lacet (10) étant réalisé de manière à être installé entre une caisse de véhicule ferroviaire et un bogie, et l'unité de commande (20) étant en communication avec ledit au moins un amortisseur de lacet (10) de manière à commander les états de fonctionnement de la première conduite d'huile de branchement (a1), de la deuxième conduite d'huile de branchement (a2) et de la troisième conduite d'huile de branchement (a3).

6. Système d'amortissement de lacet selon la revendication 5, comprenant en outre un actionneur, un premier module de détection et un deuxième module de détection, l'actionneur, le premier module de détection et le deuxième module de détection étant tous en communication avec l'unité de commande (20),
le premier module de détection étant installé sur ledit au moins un amortisseur de lacet (10) afin de saisir une information de fonctionnement dudit au moins un amortisseur de lacet (10), et le deuxième module de détection étant installé sur le véhicule ferroviaire pour saisir une information de fonctionnement du véhicule ferroviaire,
l'unité de commande (20) étant réalisée de manière à générer, pour l'actionneur, des signaux d'actionnement en fonction d'une information de saisie provenant du premier module de détection et du deuxième module de détection afin de commander une action dudit au moins un amortisseur de lacet (10).

7. Système d'amortissement de lacet selon la revendication 6, le premier module de détection comprenant un capteur de pression (70), et le deuxième module de détection comprenant un capteur d'accélération (40) et un gyroscope (50),
le capteur d'accélération (40) étant installé sur le bogie et le gyroscope (50) étant installé sur la caisse du véhicule.

8. Procédé de commande du système d'amortissement de lacet selon l'une des revendications 5 à 7, comprenant :
lorsque le véhicule ferroviaire circule sur un trajet droit, la commande de l'amortisseur de lacet (10) par l'unité de commande (20) de sorte qu'il passe en mode semi-actif, dans lequel la première vanne de commutation (21) et la deuxième vanne de commutation (41) sont fermées, et une force d'amortissement de l'amortisseur de lacet (10) est ajustée par l'électrovanne proportionnelle (31) dans la deuxième conduite d'huile de branchement (a2),
lorsque le véhicule ferroviaire circule sur un trajet en courbe, la commande de l'amortisseur de lacet (10) par l'unité de commande (20) de sorte qu'il passe en mode d'amortissement faible, dans lequel la première vanne de commutation (21) est fermée et la deuxième vanne de commutation (41) est ouverte, la force d'amortissement de l'amortisseur de lacet (10) étant réduite à une valeur minimale,
lorsque le système d'amortissement de lacet présente un dysfonctionnement, la commande de l'amortisseur de lacet (10) par l'unité de commande (20) de sorte qu'il passe en mode passif, dans lequel la première vanne de commutation (21) est ouverte et la deuxième vanne de commutation (41) est fermée, la force d'amortissement de l'amortisseur de lacet (10) étant ajustée par la vanne de décharge (22).

9. Procédé de commande selon la revendication 8, un rayon de courbe d'une voie sur laquelle circule le véhicule ferroviaire étant déterminé en obtenant des paramètres de fonctionnement du véhicule ferroviaire,
si le rayon de courbe est supérieur à une valeur prédéfinie, détermination que le véhicule ferroviaire circule sur un trajet rectiligne, et
si le rayon de courbe est inférieur à la valeur prédéfinie, détermination que le véhicule ferroviaire circule sur un trajet en courbe.

10. Véhicule ferroviaire, comprenant l'amortisseur de lacet (10) selon l'une des revendications 1 à 4, ou comprenant le système d'amortissement de lacet selon l'une des revendications 5 à 7.
